Europäisches Patentamt

European Patent Office

Office européen des brevets

(19)

(11)   **EP 0 594 276 B1**

(12)   **EUROPEAN PATENT SPECIFICATION**

(45) Date of publication and mention
of the grant of the patent:
**27.10.1999   Bulletin 1999/43**

(51) Int Cl.⁶: **G06T 17/40**, G06T 17/30

(21) Application number: **93302297.2**

(22) Date of filing: **25.03.1993**

(54) **Apparatus and method for designing a three-dimensional free-form surface**

Gerät und Verfahren zum Entwurf dreidimensionaler Freiformoberflächen

Appareil et procédé pour concevoir une surface tridimensionnelle de forme libre

(84) Designated Contracting States:
**BE CH DE FR GB IT LI NL SE**

(30) Priority: **22.10.1992   JP 32457692**

(43) Date of publication of application:
**27.04.1994   Bulletin 1994/17**

(73) Proprietor: **National Institute of
Agro-Environmental Sciences, Ministry of
Agriculture, Forestry, and Fishery
Tsukuba-shi, Ibaraki-ken (JP)**

(72) Inventors:
• **The inventor has agreed to waive his entitlement
to designation.**

(74) Representative:
**Robinson, Nigel Alexander Julian
D. Young & Co.,
21 New Fetter Lane
London EC4A 1DA (GB)**

(56) References cited:
• **SIGGRAPH'92.19TH ANNUAL ACM
CONFERENCEON COMPUTER GRAPHICS AND
INTERACTIVE TECHNIQUES, vol.26, no.2, July
1992, USA pages 177 - 184 HSU ET AL. 'direct
manipulation of free-form deformations'**
• **COMPUTER AIDED DESIGN, vol.21, no.9,
November 1989, UK pages 538 - 546, XP96200
PIEGL 'modifying the shape of rational
B-splines. Part 2: surfaces.'**
• **CONFERENCE.SCIENTIFIC VISUALIZATION OF
PHYSICAL PHENOMENA, 26 June 1991, USA
pages 435 - 456 KONNO ET AL. 'a new control
method for free-form surfaces with tangent
continuity and its applications.'**

## Description

The present invention relates to a method and an apparatus for designing a free-form surface in three-dimensional space, for example, a creative free-form surface or a free-form surface from a map indicating altitude or density or from coordinates of a three-dimensional object.

A free-form surface may be designed for reproducing or modifying a curved surface existing in the natural environment, a curved surface obtained by experiment or on computer, or for designing curved surfaces of buildings and industrial products.

In the past, Bezier curved surfaces, B-spline curved surfaces, NURBS curved surfaces, Gregory curved surfaces, etc. have been used for designing curved surfaces on computer. For example, a Bezier curved surface is expressed by the equation (1):

$$S(u, v) = \sum_{i=0}^{n} \sum_{j=0}^{m} B_j^{n}(u) \, B_j^{m}(v) \, P_{ij} \qquad \cdots\cdots\cdots\cdots (1)$$

Vector S (u, v) is a position vector of a point on a curved surface in a three-dimensional rectangular coordinate system xyz, i.e.:

$$S(u, v) = \{x(u, v), y(u, v), z(u, v)\} \qquad (2)$$

where u and v are real parameters, which change within the range of $0 \leq u \leq 1$ and $0 \leq v \leq 1$ respectively.

Vector Pij (i = 0,...,n; j = 0,...., m) is a position vector of a control point of a Bezier curved surface, and $B_i^n$ (u) is Bernstein's basic function, i.e.:

$$B_i^{n}(u) = \frac{n!}{i!\,(n-i)!} \, u^{i} \, (1-u)^{n-i} \qquad (3)$$

Meanwhile, $B_i^n$ (u) is in form of a binomial coefficient with the relationship:

$$\sum_{i=0}^{n} B_i^{n}(t) = \{(1-t)+t\}^{n} = 1 \qquad \cdots\cdots\cdots\cdots (4)$$

The sum of the product of two Bernstein's basic functions is 1.

$$\sum_{i=0}^{n} \sum_{j=0}^{m} B_i^{n}(u) \, B_j^{m}(v) =$$
$$\{(1-u)+u\}^{n} \, \{(1-v)+v\}^{m} = 1 \qquad \cdots\cdots (5)$$

In the equation (5), if n = m = 3, the following relationship exists for each value of u and v:

$$a_{00} + a_{10} + a_{20} + a_{30} + \cdots + a_{03} + a_{13} + a_{23} + a_{33} = 1 \qquad (6)$$

Point vector S (u, v) on a curved surface is given by:

$$S (u, v) = a_{00}P_{00} + a_{10}P_{10} + \cdots + a_{23}P_{23} + a_{33}P_{33} \qquad (7)$$

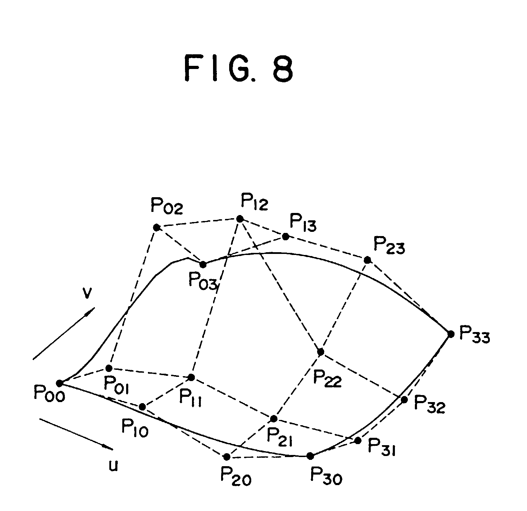

$a_{00}$ to $a_{33}$ are the product of two Bernstein's functions. Figure 8 represents a Bezier curved surface in this case.

From the equations (6) and (7), a point on the curved surface can be given by barycentric coordinates having weight on each of control points. Thus, it is evident that the shape of a Bezier curved surface can by changed within a convex polyhedron including control points by moving each control point vector Pij. The other curved surfaces such as B-spline surfaces, NURBS surfaces, and Gregory surfaces are given by functions using parameters u and v and control point vector Pij as in the case of a Bezier surface. Thus, the shape of a curved surface can be changed by the control points.

However, in deforming the shape of a free-form surface, curved surface is not moved in any of expression modes of the above free-form surfaces, and inherent parameters for expressing shape are changed and the shape is indirectly deformed.

In other words, when the shape of the curved surface is deformed, it is not that points of the curved surface are directly manipulated, but control points in the neighbourhood of the curved surface must be manipulated.

Therefore, it is not possible to freely design a free-form surface without accumulated experience to be able to estimate how the shape of the curved surface is changed and which of the control points is moved, or how far and which of the control points should be moved in order to deform the curved surface as desired. A prior art approach of this kind is described, for instance, in "Direct Manipulations of Free-Form Deformations", by W.M. Itsu et al., SIGGRAPH '92 CONFERENCE PROCEEDINGS, vol. 26, no. 2, 2 July 1992, pages 177-184, where it is described now to find control point positions that will move a user-selected surface point from a position to another.

The present invention provides a method for designing a and adjusting three-dimensional free-form surface as set out in appended claim 1.

Also, the present invention provides an apparatus for designing a three-dimensional free-form surface, provided with an input unit, a computation unit, a display unit and an adjusting unit as set out in appended claim 4.

An embodiment of the invention will now be described, by way of example only, with reference to the accompanying drawings.

Figure 1 is a flow chart for explaining in outline of a method for designing a three-dimensional free-form surface;

Figure 2 is a block diagram of an embodiment of an apparatus for designing a three-dimensional free-form surface;

Figure 3 is a flow chart illustrating operation of an embodiment of an apparatus for designing a three-dimensional free-form surface;

Figure 4 is a three-dimensional graph of a free-form surface obtained from 6 sample points using the three-dimensional free-form surface designing apparatus;

Figure 5 is a three-dimensional graph of a free-form surface newly obtained when a sample point A on the free-form surface is moved in a one direction using the three-dimensional free-form surface designing apparatus;

Figure 6 is a three-dimensional graph of a free-form surface obtained when the sample point A on the free-form surface is moved in another direction using the three-dimensional free-form surface designing apparatus;

Figure 7 is a three-dimensional graph of a free-form surface obtained when the coefficients of an auxiliary weight function for obtaining an equation of the free-form surface are adjusted using the three-dimensional free-form surface designing apparatus; and

Figure 8 shows an example of a Bezier curved surface, which is one of the conventional expression modes of a free-form surface.

First, a method for designing a three-dimensional free-form surface will be described.

Now let us consider the way of expressing a free-form surface under the condition that N sample points { ($U_i$, $V_i$, $Y_i$) } ($1 \leq i \leq N$) are collected (N is a natural number) in uvy coordinate space, using an equation, which has coordinate components of these sample points as coefficients and satisfies them. The number N of the sample points must be 3 or more in order to characterize the shape of the free-form surface.

When these sample points are moved, the coefficients in the equation of the free-form surface are also changed accordingly. Thus, the shape of the free-form surface can be changed efficiently. That is, these sample points fulfil the function of the control points to change the shape of the free-form surface.

In the conventional type Bezier surface or NURBS surface, control points are not present on the free-from surface itself, whereas these sample points functioning as control points are positioned on the free-form surface making it possible to easily change the free-form surface as desired. It is supposed that the equation to express a free-form surface is:

$$y = \frac{\sum\limits_{j}^{N} K1j\,(u,\,v)\,Yj^{+}}{\sum\limits_{j}^{N} K1j\,(u,\,v)} \qquad \cdots\cdots (8)$$

in order that the equation for the free-form surface is determined by N sample points in uvy coordinate space.

Here, K1j ($1 \leq j \leq N$; N is a natural number.) is a weight function (hereinafter referred as the main weight function), and Yj$^+$ is the y coordinate of a control point, which changes the shape of the free-form surface expressed by the equation (8).

In the equation (8), to satisfy the condition that the sample points (Ui, Vi, Yi) are points on the free-form surface of equation (8) and are control points for changing the shape of the free-form surface, the following relationship exists:

$$K1j\,(Ui,\,Vi) = \delta\,ij$$

$$\text{where,}\quad \delta\,ij = \begin{cases} 1 & \text{when } i = j \\ \\ 0 & \text{when } i \neq j \;, \end{cases} \qquad 1 \leq i \leq N,\; 1 \leq j \leq N$$

$$\cdots\cdots (9)$$

Specifically, main weight functions {K1j (u, v)} should be obtained for each of said sample points so that, except for one of the sets of a first component and a second component of three-dimensional coordinate data of the sample points, the values to the other sets are 0. In the equation (9), is is assumed that $\delta = 1$ when $i = j$. However, $\delta$ may be any value if it is a value other than 0.

Therefore, by obtaining the main weight functions {K1j (u, v)}, which satisfies the equation (9), an equation for free-form surface:

$$y = \frac{\sum\limits_{j}^{N} K1j\,(u,\,v)\,Yj}{\sum\limits_{j}^{N} K1j\,(u,\,v)} \qquad \cdots\cdots (10)$$

is determined for a free-form surface, which has N sample points (Ui, Vi, Yi) as the points on the free-form surface and as control points.

Thus, to obtain the main weight functions { K1j (u, v) }, it is assumed for each virtual data point {(Um, Vm, Yjm*)} ($1 \leq m \leq N$), the main weight function Klj (u, v) is equal to a function obtained by smoothing the virtual data {Yjm*} by functions {K2m} already known (hereinafter referred as auxiliary weight function).

That is, it is supposed that:

$$K1j \ (u, \ v) = \frac{\sum_{m}^{N} K2m \ (u, \ v) \ Yjm \cdot}{\sum_{m}^{N} K2m \ (u, \ v)} \qquad \cdots\cdots (11)$$

By adjusting this auxiliary weight function, fine adjustment of the curved surface can be achieved.

To the sets (Ui, Vi) of a first component and a second component of three-dimensional coordinate data of the sample points, the equation (11) is:

$$K1j \ (Ui, \ Vi) = \frac{\sum_{m}^{N} K2m \ (Ui, \ Vi) \ Yjm \cdot}{\sum_{m}^{N} K2m \ (Ui, \ Vi)} \qquad \cdots\cdots (12)$$

From the equation (9) and the equation (12),

$$(K1j \ (Ui, \ Vi) = ) \ \frac{\sum_{m}^{N} K2m \ (Ui, \ Vi) \ Yjm \cdot}{\sum_{m}^{N} K2m \ (Ui, \ Vi)} = \delta ij$$

$$where, \ \delta ij = \begin{cases} 1 & when \ i = j \\ \\ 0 & when \ i \neq j \ , \end{cases} \qquad 1 \leq i \leq N, \ 1 \leq j \leq N$$

$$\cdots\cdots (13)$$

In other words,

$$
K_{11} \begin{cases}
K_{11}(U_1, V_1) = \dfrac{K_{21}(U_1, V_1) Y_{11}{}^* + K_{22}(U_1, V_1) Y_{12}{}^* + \cdots + K_{2n}(U_1, V_1) Y_{1n}{}^*}{K_{21}(U_1, V_1) + K_{22}(U_1, V_1) + \cdots + K_{2n}(U_1, V_1)} = 1 \\[2mm]
K_{11}(U_2, V_2) = \dfrac{K_{21}(U_2, V_2) Y_{11}{}^* + K_{22}(U_2, V_2) Y_{12}{}^* + \cdots + K_{2n}(U_2, V_2) Y_{1n}{}^*}{K_{21}(U_2, V_2) + K_{22}(U_2, V_2) + \cdots + K_{2n}(U_2, V_2)} = 0 \\[2mm]
\qquad\qquad\vdots \\[2mm]
K_{11}(U_n, V_n) = \dfrac{K_{21}(U_n, V_n) Y_{11}{}^* + K_{22}(U_n, V_n) Y_{12}{}^* + \cdots + K_{2n}(U_n, V_n) Y_{1n}{}^*}{K_{21}(U_n, V_n) + K_{22}(U_n, V_n) + \cdots + K_{2n}(U_n, V_n)} = 0
\end{cases}
$$

$$
K_{1a} \begin{cases}
K_{1a}(U_1, V_1) = \dfrac{K_{21}(U_1, V_1) Y_{a1}{}^* + K_{22}(U_1, V_1) Y_{a2}{}^* + \cdots + K_{2n}(U_1, V_1) Y_{an}{}^*}{K_{21}(U_1, V_1) + K_{22}(U_1, V_1) + \cdots + K_{2n}(U_1, V_1)} = 0 \\[2mm]
\qquad\qquad\vdots \\[2mm]
K_{1a}(U_{a-1}, V_{a-1}) = \dfrac{K_{21}(U_{a-1}, V_{a-1}) Y_{a1}{}^* + K_{22}(U_{a-1}, V_{a-1}) Y_{a2}{}^* + \cdots + K_{2n}(U_{a-1}, V_{a-1}) Y_{an}{}^*}{K_{21}(U_{a-1}, V_{a-1}) + K_{22}(U_{a-1}, V_{a-1}) + \cdots + K_{2n}(U_{a-1}, V_{a-1})} = 0 \\[2mm]
K_{1a}(U_a, V_a) = \dfrac{K_{21}(U_a, V_a) Y_{a1}{}^* + K_{22}(U_a, V_a) Y_{a2}{}^* + \cdots + K_{2n}(U_a, V_a) Y_{an}{}^*}{K_{21}(U_a, V_a) + K_{22}(U_a, V_a) + \cdots + K_{2n}(U_a, V_a)} = 1 \\[2mm]
K_{1a}(U_{a+1}, V_{a+1}) = \dfrac{K_{21}(U_{a+1}, V_{a+1}) Y_{a1}{}^* + K_{22}(U_{a+1}, V_{a+1}) Y_{a2}{}^* + \cdots + K_{2n}(U_{a+1}, V_{a+1}) Y_{an}{}^*}{K_{21}(U_{a+1}, V_{a+1}) + K_{22}(U_{a+1}, V_{a+1}) + \cdots + K_{2n}(U_{a+1}, V_{a+1})} = 0 \\[2mm]
\qquad\qquad\vdots \\[2mm]
K_{1a}(U_n, V_n) = \dfrac{K_{21}(U_n, V_n) Y_{a1}{}^* + K_{22}(U_n, V_n) Y_{a2}{}^* + \cdots + K_{2n}(U_n, V_n) Y_{an}{}^*}{K_{21}(U_n, V_n) + K_{22}(U_n, V_n) + \cdots + K_{2n}(U_n, V_n)} = 0
\end{cases}
\qquad \cdots\cdots (14)
$$

$$
K_{1n} \begin{cases}
K_{1n}(U_1, V_1) = \dfrac{K_{21}(U_1, V_1) Y_{n1}{}^* + K_{22}(U_1, V_1) Y_{n2}{}^* + \cdots + K_{2n}(U_1, V_1) Y_{nn}}{K_{21}(U_1, V_1) + K_{22}(U_1, V_1) + \cdots + K_{2n}(U_1, V_1)} = 0 \\[2mm]
\qquad\qquad\vdots \\[2mm]
K_{1n}(U_n, V_n) = \dfrac{K_{21}(U_n, V_n) Y_{n1}{}^* + K_{22}(U_n, V_n) Y_{n2}{}^* + \cdots + K_{2n}(U_n, V_n) Y_{nn}{}^*}{K_{21}(U_n, V_n) + K_{22}(U_n, V_n) + \cdots + K_{2n}(U_n, V_n)} = 1
\end{cases}
$$

$$(1 \leq n \leq N)$$

From these (N × N) simultaneous equations, (N × N) virtual data $\{Y_{jm}{}^*\}$ can be obtained.

Substituting these virtual data $\{Y_{jm}{}^*\}$ into the equation (11), the main weight functions $\{K_{1j}(u, v)\}$ are determined. Further, an equation (10) to express the free-form surface is determined, by smoothing a plurality of the third component of three-dimensional coordinate data of the sample points by these main weight functions $\{K_{1j}(u, v)\}$.

From this equation (10) of free-form surface, interpolation values $\{y\}$ to arbitrary values of (u, v) are calculated, and a three-dimensional graph of the free-form surface is prepared on a two-dimensional plane based on these interpolation values.

The main weight functions $\{K_{1j}(u, v)\}$ in the equation (10) are determined in such manner that the free-form surface passes through N sample points. Further, because a plurality of the third component of the three-dimensional coordinate data of the sample points are used as coefficients in the equation, it is possible to change the shape of the free-form surface as desired by watching the above three-dimensional graph of the free-form surface with the third component of the three-dimensional coordinate data of the sample points being changed, i.e. by moving the sample points in the direction of y axis.

Also, it is possible to change the shape of the free-form surface by adjusting the auxiliary weight functions {K2m (u, v) }.

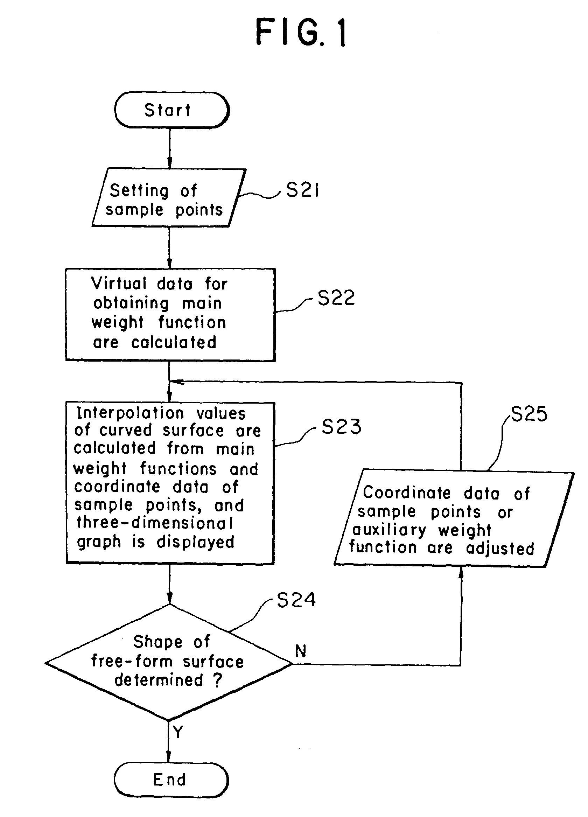

Using the flow chart of Fig. 1, the above procedure can be explained as follows:

First, the sample points are set, which characterize a free-form surface in a three-dimensional space in the first step S21. In the second step S22, virtual data { Yjm* } are obtained by the equation (9) and the equation (12). The equation (9) expresses the fact that main weight function K1j (u, v) is present for each of said sample points, whereby, except for one of the sets (Ui, Vi) of a first component and a second component of three-dimensional coordinate data of the sample points, the function values for all other sets are 0. The equation (12) demonstrates that the main weight functions { K1j (u, v) } are obtained by smoothing the virtual data { Yjm* } by auxiliary weight functions { K2m (u, v) } . In the third step S23, main weight functions are obtained from the virtual data { Yjm* } acquired in the second step and the equation (11). The equation for the free-form surface is obtained from the equation (10), and interpolation values { y } to arbitrary values of (u, v) are calculated. Based on these interpolation values, a three-dimensional graph is prepared on a two-dimensional plane. In the fourth step S24, the shape of the free-form surface is examined according to the three-dimensional graph, and it is determined whether the shape should be adjusted or not. When the shape of the free-form surface is adjusted, coordinate data of the sample points or auxiliary weight functions { K2m (u, v) } are adjusted in the fifth step S25.

Thus, it is possible by this method to freely design the free-form surface.

When a three-dimensional curved surface is prepared on a conventional type free-form surface such as Bezier surface, it is prepared by connecting a number of patches (small curved surfaces) and it is difficult to smoothly connect the patches with the result that the curved surface often has seams.

By the above method, the main weight functions { K1j (u, v) } in the equation (1) of the free-form surface can be obtained as a differentiable continuous function. Thus, the equation (10) for the free-form surface can be differentiated over the whole region by as many times as desired. As the result, a smooth and seamless three-dimensional surface can be designed.

Next, a description will be given on an embodiment of an apparatus for designing a three-dimensional free-form surface based on the above method.

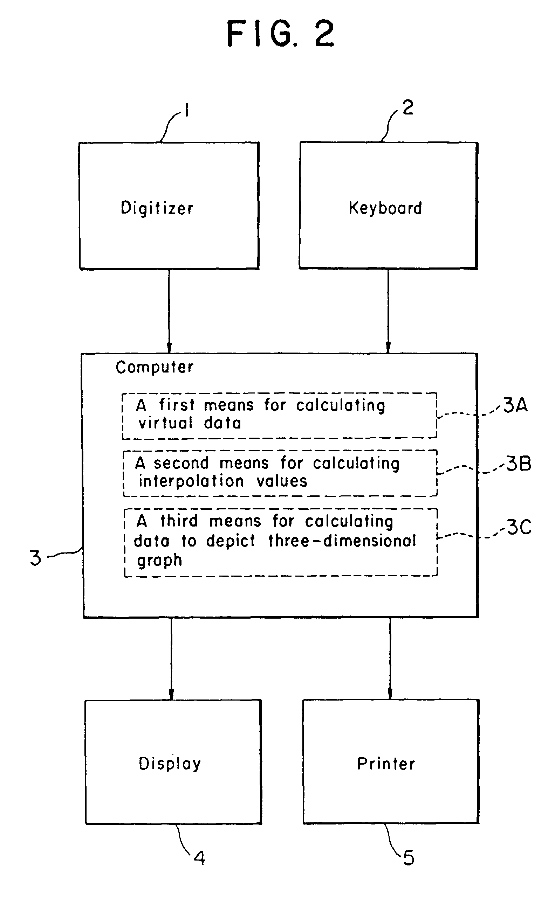

Figure 2 is a block diagram showing an embodiment of an apparatus for designing a three-dimensional free-form surface.

As input unit, a digitizer 1 and a keyboard 2 are used. For example, in the case that three-dimensional coordinate data of sample points on a three-dimensional object are collected for modifying the curved surface of that three-dimensional object existing in natural environment, input is performed only by the digitizer 1. For three-dimensional data of sample points including data such as altitude shown on a map, coordinates on the map are collected by the digitizer 1 as two-dimensional data, and the data such as altitude are inputted from the keyboard 2. In the case of a free-form surface that is newly designed, three-dimensional coordinate data of the sample points for designing are inputted from the keyboard 2. As data, it is preferable to use three or more points, which reliably express features of the shape of the three-dimensional object.

A computer 3, used as a computing unit, is provided with a first means 3A for calculating virtual data { Yjm* } ($1 \leqq m \leqq N$) to obtain main weight functions { K1j (u, v) }, whereby a function value for one of sets (Ui, Vi) of a first component and a second component of three-dimensional coordinate data of the sample points is a value other than 0 (for example, 1 in this case), and function values for the other sets of sample points are 0 based on the three-dimensional data { (Ui, Vi, Yi) } ($1 \leqq i \leqq N$) of three or more sample points inputted through the input unit and auxiliary weight functions K2m (u, v) ($1 \leqq m \leqq N$) with a second means 3B for obtaining interpolation values { yk } to any point { (uk, vk) } ($1 \leqq k \leqq M$; k and M are natural numbers. It is preferable that the number M is large enough to depict a three-dimensional graph of the free-form surface) on the uv plane by a plurality of a third component { Y } ($1 \leqq i \leqq N$) of three-dimensional coordinate data of the sample points and each of the main weight functions { K1j (u, v) } obtained by said virtual data { Yjm* } and said auxiliary weight functions { K2m (u, v) }, and with a third means 3C for calculating data to depict a three-dimensional graph from the points (uk, vk, yk) on the free-form surface obtained by the second means 3B.

A display 4 and a printer 5 serving as a display unit for displaying a three-dimensional graph of the free-form surface in response to output of the computer 3.

The keyboard 2 and the computer 3 also serve as a first adjusting unit, by which user manually adjusts the third component { Yi } of three-dimensional coordinate data of said sample points while watching a three-dimensional graph displayed on the display 4 or the printer 5, as a second adjusting unit for manually adjusting coefficients in the auxiliary weight functions { K2m (u, v) }, and also as a specifying unit for specifying a computation equation itself of the auxiliary weight functions { K2m (u, v) } .

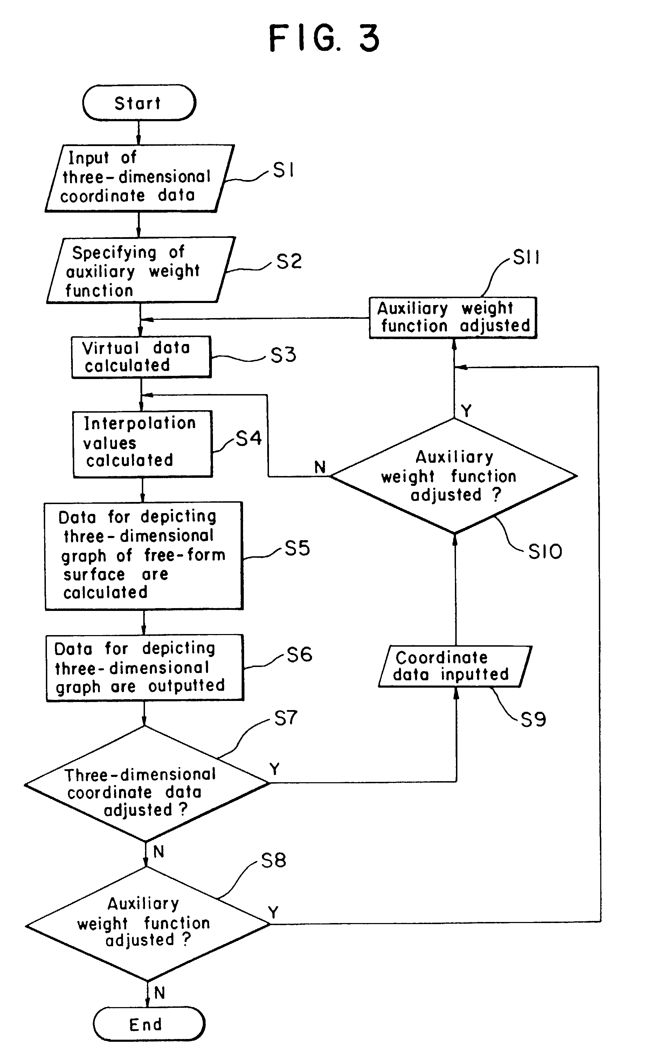

In the following, description will be given on operation of the computer 3, using the flow chart of Fig. 3.

First, three-dimensional data { (Ui, Vi, Yi) } ($1 \leqq i \leqq N$) of N sample points (N = 3 or more) are inputted from the digitizer 1 in the first step S1.

Next, the computation equation for the auxiliary weight functions { K2m (u, v) } are specified by the user in the second step S2 through a keyboard 2, depending upon the properties of the data. For example, it is supposed that the equation:

$$K2m (u, v) =$$

$$exp \{ - a1 (u - Um)^2 - a2 (v - Vm)^2 \}$$

$$(1 \leq m \leq N) \tag{15}$$

is specified. a1 and a2 are constants determined according to the property of the data, and these are defined in the second step S2.

In the third step S3, virtual data { Yjm* } (1 $\leq$ m $\leq$ N; 1 $\leq$ j $\leq$ N) are obtained from three-dimensional data {(Ui, Vi, Yi) } (1 $\leq$ i $\leq$ N) of N sample points inputted in the first step S1 and by auxiliary weight functions { K2m (u,v) } (1 $\leq$ m $\leq$ N). That is, a solution { Yjm* } of the simultaneous equations (14) to each value of j and m is obtained. Substituting { Yjm* } (1 $\leq$ m $\leq$ N; 1 $\leq$ j $\leq$ N) from the simultaneous equations in the equation (11), N main weight functions { K1j (u, v) } are obtained.

In the fourth step S4, the equation (10) of the free-form surface is determined by N main weight functions {K1j (u, v) } and a plurality of the third component { Yi } of three-dimensional coordinate data of the sample points, and interpolation values { yk } to arbitrary points { (uk, vk) } (1 $\leq$ k $\leq$ M; M is a natural number. It is preferable that the number M is large enough to depict a three-dimensional graph of the free-form surface) on the uv plane are obtained.

In the fifth step S5, the data for depicting a three-dimensional graph on a two-dimensional plane are calculated by points { (uk, vk, yk) } on the free-form surface obtained in the fourth step.

The procedures in the third step S3, the fourth step S4, and the fifth step S5 are performed by the first means 3A, the second means 3B and the third means 3C of the computer 3 of block diagram shown in Fig. 2.

In the sixth step S6, the data for depicting a three-dimensional graph on a two-dimensional plane as calculated in the fifth step S5 are outputted. The display 4 and the printer 5 serving as the display unit of Fig. 2 display three-dimensional graph of the free-form surface based on the data outputted in the sixth step S6.

In the seventh step S7, user checks and examines the shape of the free-form surface in the three-dimensional graph displayed by the display 4 and the printer 5 and makes decision as to whether adjustment should be made on the third component { Yi } of three-dimensional coordinate data of the sample points in order to change the shape of the free-form surface.

Similarly, in the eighth step S8, the shape of the free-form surface is checked and examined based on the three-dimensional graph displayed by the display 4 and the printer 5, and it is decided whether adjustment should be made on coefficients (a1, a2) in the equation (15) of auxiliary weight functions { K2m(u, v) } in order to change the shape of the free-form surface.

Therefore, if the user does not adjust the third component { Yi } of the three-dimensional coordinate data of the sample points and the coefficients (a1, a2) of auxiliary weight function, the shape of the free-form surface is determined.

In case the third component { Yi } of three-dimensional coordinate data of the sample points is changed, the third component { Yi } of three-dimensional coordinate data is changed through a first adjusting unit in the ninth step S9. Further, in the tenth step S10, it is decided whether adjustment should be made on the coefficients (a1, a2) of auxiliary weight function. In case the coefficients (a1, a2) of auxiliary weight functions { K2m (u, v) } are adjusted, the coefficients (a1, a2) of auxiliary weight functions { K2m (u, v) } are inputted again through a second adjusting unit in the eleventh step S11, and the procedure returns to the third step S3. In case the user does not adjust auxiliary weight functions { K2m (u, v) }, the procedure returns to the fourth step S4.

In case the user does not change the third component { Yi } of three-dimensional coordinate data of the sample points and changes only the coefficients (a1, a2) of auxiliary weight functions { K2m (u, v) }, the coefficients (a1, a2) of auxiliary weight functions { K2m (u, v) } are inputted again in the eleventh step S11, and the procedure returns to the third step S3.

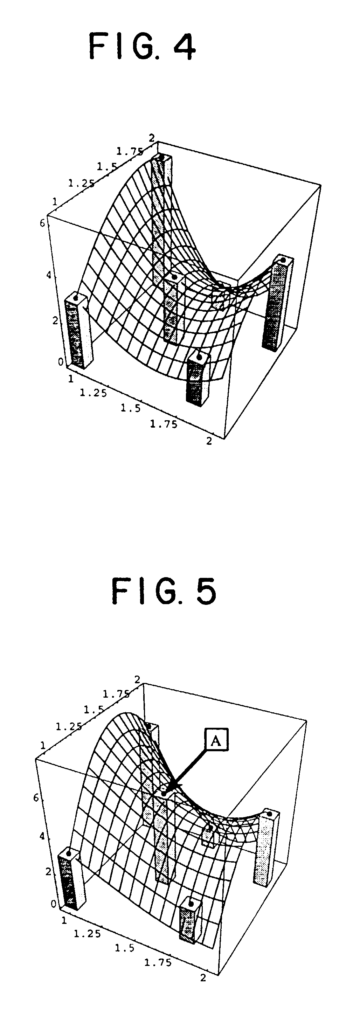

Fig. 4 shows a three-dimensional graph of a free-form surface obtained from 6 sample points using the apparatus for designing three-dimensional free-form surface of the above embodiment. In this case, a1 = a2 = 1 in the equation (15).

Fig. 5 shows a three-dimensional graph of a free-form surface obtained by moving a sample point A in order to increase the third component of three-dimensional coordinate data of the sample point A, which also serves as a control point of the free-form surface of Fig. 4.

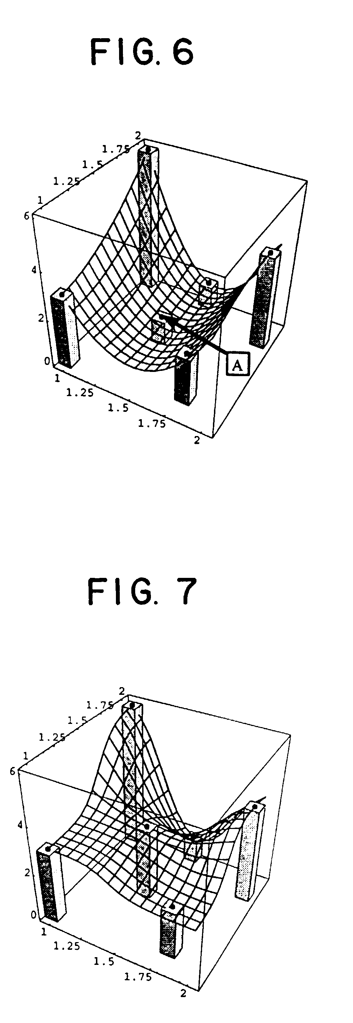

Fig. 6 shows a three-dimensional graph of a free-form surface obtained by moving a sample point A in order to decrease the third component of three-dimensional coordinate data of the sample point A in Fig. 4.

Fig. 7 represents a three-dimensional graph of a free-form surface obtained when the coefficients (a1, a2) of auxiliary weight functions { K2m (u, v) } of the equation (15) was the free-form surface expressed by the three-dimensional graph of Fig. 4 is obtained are a1 = a2 = 10.

In the apparatus for designing three-dimensional free-form surface of the above embodiment, keyboards are used for the first adjusting unit for manual adjustment of the third component { Yi } of three-dimensional coordinate data of the sample points by the user, for the second adjusting unit for manually adjusting the coefficients (a1, a2) of auxiliary weight functions { K2m (u, v) }, and also for a specifying unit for specifying the computation equation itself of the auxiliary weight functions { K2m (u, v) }, whereas other input unit may be used. Also, if the shape of the free-form surface can be changed as desired by the first adjusting unit for manual adjustment of the third component { Yi } of the three-dimensional coordinate data of the sample points, either the second adjusting unit or the specifying unit or both may not be used.

In at least preferred embodiments there is provided a method and an apparatus by which a user can determine an equation for a free-form surface so that sample points in three-dimensional coordinate space are present on the free-form surface, and also the user can freely design the free-form surface by moving the sample points.

To achieve this a main weight function is obtained for each sample point, whereby the function value to one of the sample points is not 0 and the function value to the other sample points is 0, and a free-form surface is expressed by smoothing coordinate data of corresponding sample points by these main weight functions.

## Claims

1. A method for designing a three-dimensional free-form surface, comprising the steps of:

   determining main weight functions $(k1_J(u,v))$ for each of a plurality of (N) sample points (Ui, Vi, Yi) for obtaining an equation (10) for the free-form surface having each of said plurality of sample points as points on the surface, whereby a main weight function value (K1j(Ui, Vi)) for one of a plurality of sets $(K1_1,...,K1_N)$ of a first component (Ui) and a second component (Vi) of three-dimensional coordinate data of 3 or more of said sample points is a value (K1n(Un,Vn), n = 1,...,N) other than 0, and main weight function values for the remainings of said plurality of sets are 0;
   determining interpolation values ({y}) of said free-form surface using said equation for the free-form surface by smoothing between a plurality of third component values (Yi) of said three-dimensional coordinate data of said sample points using said main weight functions;
   calculating data for depicting a three-dimensional graph of said free-form surface as obtained by said interpolation values;
   displaying said three-dimensional graph on a display unit; and
   adjusting one or more of the third components (Yi) of said three-dimensional coordinate data of said sample points while watching said three-dimensional graph displayed on said display unit to design the shape of said free-form solid.

2. A method according to claim 1, wherein, under the condition that said main weight functions are equal to the functions obtained by smoothing unknown virtual data (Um, Vm, Yjm*) by means of auxiliary weight functions $(K2_m (u,v))$ already known, said main weight functions are obtained by calculating said virtual data.

3. A method according to claim 2, wherein, when the shape of said free-form surface is designed while watching said three-dimensional graph, coefficients (a1, a2) in said auxiliary weight function are changed.

4. An apparatus for designing a three-dimensional free-form surface, having:

   an input unit (1, 2) for inputting three-dimensional coordinate data of sample points (Ui, Vi, Yi);
   a computation unit (3), which comprises:

   i) a first means (3a) for obtaining main weight functions $(K1_J(u,v))$ by calculating (NxN) virtual data (Yjm*) based on said main weight functions for obtaining an equation (10) for the free-form surface having each of said sample points as points of the surface, whereby a main weight function value for one of a plurality of sets $(K1_1,...,K1_N)$ of a first component (Ui) and a second component (Vi) of three-dimensional coordinate data of 3 or more of said sample points inputted through said input unit is a value (K1n(Un,Vn), n = 1,..., N) other than 0, and main weight function values for the remainings of said plurality of sets are 0, said main weight functions being equal to the functions obtained by smoothing unknown virtual data (Um,Vm, Y$_J$m*) by means of already known auxiliary weight functions (K2m(u,v));

ii) a second means (3B) for obtaining interpolation values ({Y}) of said free-form surface by said equation for the free-form surface, obtained by smoothing between a plurality of third component values (Yi) of said three-dimensional coordinate data of said sample points inputted through said input unit using said main weight functions; and

iii) a third means (3C) for calculating data to depict a three-dimensional graph from said free-form surface obtained from said interpolation values ({Y});

a display unit (4, 5) for displaying said three-dimensional graph in response to output of said computation unit; and

a first adjusting unit (2) for designing the shape of said free-form surface by manual adjustment of the third component (Yi) of said three-dimensional coordinate data of said sample points while watching said three-dimensional graph displayed on said display unit.

5. An apparatus according to claim 4, wherein there is provided a second adjusting unit (2, S11) by which the user designs the shape of said free-form surface by manual adjustment of coefficients (a1, a2) in said auxiliary weight function while watching said three-dimensional graph displayed on said display unit.

6. An apparatus according to any one of claims 4 and 5, wherein there is provided a specifying unit for specifying a computation equation itself for said auxiliary weight function.

7. A method as claimed in any one of claims 1, 2 and 3, wherein said free-form surface models a physical entity with said sample points representing points on the surface of said physical entity.

8. An apparatus as claimed in any one of claims 4, 5 and 6, wherein said free-form surface models a physical entity with said sample points representing points on the surface of said physical entity.

**Patentansprüche**

1. Verfahren für die Gestaltung einer dreidimensionalen Oberfläche einer freien Form, welches die Schritte aufweist:

Bestimmen von Hauptgewichtsfunktionen (K1$_j$(uv)) jeweils für eine Mehrzahl von (N) Aufnahmepunkten (Ui, Vi Yi), um eine Gleichung (10) für die Oberfläche der freien Form bzw. Freiform zu erhalten, welche jeden aus der Mehrzahl von Aufnahmepunkten als Punkte der Oberfläche enthält, wobei ein Hauptgewichtsfunktionswert (K1jx(Ui, Vi)) für einen aus der Mehrzahl von Sätzen (K1$_1$, ..., K1$_N$) einer ersten Komponente (Ui) und einer zweiten Komponente (Vi) dreidimensionaler Koordinatendaten von drei oder mehr der Aufnahmepunkte ein Wert (K1n(Un, Vn), n = 1, ..., N) ist, der sich von 0 unterscheidet, und die Hauptgewichtsfunktionswerte für die verbleibenden aus der Mehrzahl von Sätzen 0 sind,

Bestimmen von Interpolationswerten ({y}) der Freiformoberfläche unter Verwendung der Gleichung für die Freiformoberfläche, durch Glätten zwischen einer Mehrzahl von dritter Komponentenwerte (Yi) der dreidimensionalen Koordinatendaten der Aufnahmepunkte unter Verwendung der Hauptgewichtsfunktionen,

Berechnen von Daten für das Darstellen eines dreidimensionalen Graphen bzw. einer dreidimensionalen Abbildung der Freiformoberfläche, wie sie durch die Interpolationswerte erhalten wird,

Darstellen des dreidimensionalen Graphen auf einer Anzeigeeinheit, und

Einstellen einer oder mehrerer der dritten Komponenten (Yi) der dreidimensionalen Koordinatendaten der Aufnahmepunkte, während man beobachtet, wie der dreidimensionale Graph auf der Anzeigeeinheit angezeigt wird, um die Form des Freiformmassivteils zu gestalten.

2. Verfahren nach Anspruch 1, wobei unter der Bedingung, daß die Hauptgewichtsfunktionen gleich den Funktionen sind, die man durch Glätten unbekannter virtueller Daten (Um, Vm, Yjm*) mit Hilfe von hilfsweisen Gewichtsfunktionen (K2m(u, v)) erhält, die bereits bekannt sind, die Hauptgewichtsfunktionen durch Berechnen der virtuellen Daten erhalten werden.

3. Verfahren nach Anspruch 2, wobei dann, wenn die Form bzw. Gestalt der Freiformoberfläche gebildet wird, während der dreidimensionale Graph beobachtet wird, die Koeffizienten (a1, a2) in der hilfsweisen Gewichtsfunktion verändert werden.

4. Vorrichtung für die Gestaltung einer frei geformten, dreidimensionalen Oberfläche mit:

einer Eingabeeinheit (1, 2) für das Eingeben dreidimensionaler Koordinatendaten von Aufnahmepunkten bzw. Probepunkten (Ui, Vi, Yi),
einer Berechnungseinheit (3), die aufweist:

i) eine erste Einrichtung (3a) für das Erhalten von Hauptgewichtsfunktionen ($k1_j(u, v)$) durch Berechnen (N x N) von virtuellen Daten (Yjm*) auf der Grundlage der Hauptgewichtsfunktionen, um eine Gleichung (10) für die frei geformte Oberfläche zu erhalten, bei welcher jeder der Aufnahme- bzw. Probepunkte ein Punkt der Fläche ist, wobei ein Hauptgewichtsfunktionswert für einen aus einer Mehrzahl von Sätzen ($K1_1$, ..., $K1_N$) einer ersten Komponente (Ui) und einer zweiten Komponente (Vi) von dreidimensionalen Koordinatendaten aus drei oder mehr der Aufnahme- bzw. Probepunkte, welche durch die Eingabeeinheit eingegeben werden, einen von 0 verschiedenen Wert (K1n(Un, Vn), n = 1, ..., N) hat, und die Werte der Hauptgewichtsfunktion für die verbleibenden aus der Mehrzahl von Sätzen 0 betragen, wobei die Hauptgewichtsfunktionen gleich den Funktionen sind, die man durch Glätten unbekannter virtueller Daten (Um, Vm, Yjm*) mit Hilfe von bereits bekannten Hilfsgewichtsfunktionen (K2m(u,v)) erhält,
ii) eine zweite Einrichtung (3B) für das Erhalten von Interpolationswerten ({Y}) der frei geformten Oberfläche durch die Gleichung für die frei geformte Oberfläche, welche man durch Glätten bzw. Ausgleich zwischen einer Mehrzahl dritter Komponentenwerte (Yi) der dreidimensionalen Koordinatendaten der durch die Eingabeeinheit angegebenen Probepunkte unter Verwendung der Hauptgewichtsfunktionen erhält, und
iii) eine dritte Einrichtung (3C) für das Berechnen von Daten, um einen dreidimensionalen Graphen für die aus den Interpolationswerten ({Y}) erhaltene Freiformoberfläche darzustellen,

eine Anzeigeeinheit (4, 5) für das Anzeigen bzw. Darstellen des dreidimensionalen Graphen unter Ansprechen auf die Ausgabe der Berechnungseinheit, und
eine erste Einstelleinheit (2) für das Gestalten der Form der frei geformten Oberfläche durch manuelle Einstellung der dritten Komponente (Yi) der dreidimensionalen Koordinatendaten der Probepunkte, während man beobachtet, wie der dreidimensionale Graph auf der Anzeigeeinheit dargestellt wird.

5. Vorrichtung nach Anspruch 4, wobei eine zweite Einstelleinheit (2, S11) vorgesehen ist, durch welche der Benutzer die Gestalt der frei geformten Oberfläche durch manuelle Einstellung von Koeffizienten (a1, a2) in den hilfsweisen Gewichtsfunktionen gestaltet, während er den auf der Anzeigeeinheit dargestellten dreidimensionalen Graphen beobachtet.

6. Vorrichtung nach einem der Ansprüche 4 oder 5, wobei eine Spezifizierungseinheit vorgesehen ist für das Spezifizieren bzw. Angeben einer Berechnungsgleichung selbst oder einer hilfsweisen Gewichtsfunktion.

7. Verfahren nach einem der Ansprüche 1, 2 oder 3, wobei die frei geformte Oberfläche einen physikalischen Gegenstand modellhaft wiedergibt, wobei die Aufnahme- bzw. Probepunkte Punkte auf der Oberfläche des physikalischen Gegenstandes wiedergeben.

8. Vorrichtung nach einem der Ansprüche 4, 5 oder 6, wobei die frei geformte Oberfläche einen physikalischen Gegenstand modellhaft wiedergibt, wobei die Aufnahmepunkte Punkte auf der Oberfläche des physikalischen Gegenstandes wiedergeben.

**Revendications**

1. Procédé de conception d'une surface tridimensionnelle de forme libre, comprenant les étapes dans lesquelles :

on détermine des fonctions ($K1_j$ (u, v)) de pondération principale de chacun d'une pluralité de (N) points d'échantillon (Ui, Vi, Yi) pour obtenir une équation (10) de la surface de forme libre comportant chacun de ladite pluralité de points d'échantillon, en tant que points situés sur la surface, ce par quoi une valeur (K1j (Ui, Vi)) de fonction de pondération principale de l'un d'une pluralité d'ensembles ($K1_1$, ..., $K1_N$) d'une première composante (Ui) et d'une deuxième composante (Vi) de données de coordonnées tridimensionnelles de 3, ou plus, desdits points d'échantillon a une valeur (K1n (Un, Vn), n = 1, ..., N) autre que 0, et des valeurs de fonction de pondération principale du reste de ladite pluralité d'ensembles ont une valeur de 0 ;

on détermine des valeurs ({y}) d'interpolation de ladite surface de forme libre en utilisant ladite équation de la surface de forme libre en effectuant un lissage entre une pluralité de troisièmes valeurs (Yi) de composante desdites données de coordonnées tridimensionnelles desdits points d'échantillon en utilisant lesdites fonctions de pondération principale ;

on calcule des données pour représenter un graphique tridimensionnel de ladite surface de forme libre telle qu'on l'a obtenue par lesdites valeurs d'interpolation ;

on affiche ledit graphique tridimensionnel sur un module d'affichage ; et

on ajuste une, ou plusieurs, des trois composantes (Yi) desdites données de coordonnées tridimensionnelles desdits points d'échantillon tout en observant ledit graphique tridimensionnel affiché sur ledit module d'affichage, pour concevoir la forme dudit solide de forme libre.

2. Procédé selon la revendication 1, dans lequel, dans les conditions où lesdites fonctions de pondération principale sont égales aux fonctions obtenues en lissant des données virtuelles inconnues (Um, Vm, Yjm*) au moyen de fonctions (K2m, (u, v)) de pondération auxiliaire déjà connues, lesdites fonctions de pondération principale sont obtenues en calculant lesdites données virtuelles.

3. Procédé selon la revendication 2, dans lequel la forme de ladite surface de forme libre est conçue tout en observant ledit graphique tridimensionnel, dans lequel on change des coefficients (a1, a2) de ladite fonction de pondération auxiliaire.

4. Dispositif de conception d'une surface tridimensionnelle de forme libre, comportant :

un module (1, 2) d'entrée destiné à entrer des données de coordonnées tridimensionnelles de points d'échantillon (Ui, Vi, Yi) ;

un module (3) de calcul qui comprend :

i) un premier moyen (3a) destiné à obtenir des fonctions (K1j (u, v)) de pondération principale en calculant (N x N) données virtuelles (Yjm*) sur la base desdites fonctions de pondération principale pour obtenir une équation (10) de la surface de forme libre comportant chacun desdits points d'échantillon, en tant que points de la surface, ce par quoi une valeur de fonction de pondération principale de l'un d'une pluralité d'ensembles $(K1_1, ..., K1_N)$ d'une première composante (Ui) et d'une deuxième composante (Vi) de données de coordonnées tridimensionnelles de 3, ou plus, desdits points d'échantillon entrés dans ledit module d'entrée a une valeur $(K1n (Un, Vn), n = 1, ..., N)$ autre que 0, et des valeurs de fonction de pondération principale du reste de ladite pluralité d'ensembles ont une valeur de 0, lesdites fonctions de pondération principale étant égales aux fonctions obtenues en lissant des données virtuelles inconnues (Um, Vm, Yjm*) au moyen de fonctions (K2m (u, σ)) de pondération auxiliaire déjà connues ;

ii) un deuxième moyen (3B) destiné à obtenir des valeurs d'interpolation ({Y}) de ladite surface de forme libre par ladite équation pour la surface de forme libre, obtenue en effectuant un lissage entre une pluralité de troisièmes valeurs (Yi) de composante desdites données de coordonnées tridimensionnelles desdits points d'échantillon entrés dans ledit module d'entrée en utilisant lesdites fonctions de pondération principale ; et

iii) un troisième moyen (3C) destiné à calculer des données pour représenter un graphique tridimensionnel de ladite surface de forme libre obtenue à partir desdites valeurs d'interpolation ({Y}) ;

un module (4, 5) d'affichage destiné à afficher ledit graphique tridimensionnel en réponse à une sortie dudit module de calcul ; et

un premier module (2) d'ajustement destiné à concevoir la forme de ladite surface de forme libre en ajustant de façon manuelle la troisième composante (Yi) desdites données de coordonnées tridimensionnelles desdits points d'échantillon tout en observant ledit graphique tridimensionnel affiché sur ledit module d'affichage.

5. Dispositif selon la revendication 4, dans lequel on a prévu un second module (2, S11) d'ajustement par lequel l'utilisateur conçoit la forme de ladite surface de forme libre par ajustement manuel de coefficients (al, a2) dans ladite fonction de pondération auxiliaire tout en observant ledit graphique tridimensionnel affiché sur ledit module d'affichage.

6. Dispositif selon l'une quelconque des revendications 4 et 5, dans lequel on a prévu un module de spécification destiné à spécifier une équation de calcul elle-même de ladite fonction de pondération auxiliaire.

7.  Procédé selon l'une quelconque des revendications 1, 2 et 3, dans lequel ladite surface de forme libre modélise une entité physique à l'aide desdits points d'échantillon représentant des points situés sur la surface de ladite entité physique.

8.  Dispositif selon l'une quelconque des revendications 4, 5 et 6, dans lequel ladite surface de forme libre modélise une entité physique à l'aide desdits points d'échantillon représentant des points situés sur la surface de ladite entité physique.

# FIG. 1

```
        ┌─────────┐
        │  Start  │
        └─────────┘
             │
             ▼
      ╱────────────────╱
     ╱  Setting  of   ╱───── S21
    ╱  sample  points ╱
   ╱────────────────╱
             │
             ▼
    ┌──────────────────┐
    │ Virtual data for │
    │ obtaining  main  │───── S22
    │ weight  function │
    │ are  calculated  │
    └──────────────────┘
             │
             ▼
    ┌──────────────────┐
    │ Interpolation values │
    │ of curved surface are │
    │ calculated  from  main │───── S23
    │ weight  functions  and │
    │ coordinate  data  of  │                    ┌─────────────────────┐
    │ sample  points,  and  │        S25 ─────── ╱ Coordinate  data  of ╱
    │ three-dimensional     │                   ╱ sample  points   or  ╱
    │ graph  is  displayed  │                  ╱  auxiliary  weight   ╱
    └──────────────────┘                      ╱ function are adjusted ╱
             │                               ╱─────────────────────╱
             ▼                                         ▲
        ╱─────────╲          S24                       │
       ╱  Shape of ╲──────────                         │
      ╱ free-form surface ╲ ──── N ──────────────────────
      ╲ determined ? ╱
        ╲─────────╱
             │ Y
             ▼
        ┌─────────┐
        │   End   │
        └─────────┘
```

# FIG. 2

# FIG. 3

```
        Start

  Input of
  three-dimensional        S1
  coordinate data

  Specifying of            S2
  auxiliary weight
  function                                        Auxiliary weight        S11
                                                  function adjusted

  Virtual data             S3
  calculated

  Interpolation            S4
  values                                          Y
  calculated                          N      Auxiliary
                                             weight function
                                             adjusted ?
  Data for depicting
  three-dimensional
  graph of free-form       S5                                  S10
  surface are
  calculated

  Data for depicting       S6         Coordinate
  three-dimensional                   data inputted
  graph are outputted                                      S9

                           S7
                                    Y
       Three-dimensional
       coordinate data
       adjusted ?

            N              S8
                                    Y
        Auxiliary
        weight function
        adjusted ?

            N

          End
```

# FIG. 4

# FIG. 5

# FIG. 6

# FIG. 7

# FIG. 8